# EUROPÄISCHE PATENTANMELDUNG

(11) **EP 3 391 978 A1**
(43) Veröffentlichungstag der Anmeldung: **24.10.2018**
(21) Anmeldenummer: 18161584.0
(22) Anmeldetag: 13.03.2018
(51) Int. Cl.: B21C 37/26, B21D 15/04, B23K 11/08, F28F 1/40, F28F 1/36, B23K 26/302

(54) **VERFAHREN ZUR HERSTELLUNG EINES RIPPENROHRES UND EINES WÄRMETAUSCHERS**

(30) Priorität: 13.03.2017 DE 102017105254
(71) Anmelder: Schmöle GmbH, 58730 Fröndenberg (DE)
(72) Erfinder: UNGER, Markus, 58708 Menden (DE)
(74) Vertreter: Roche, von Westernhagen & Ehresmann

(57) **Zusammenfassung**

Beschrieben und dargestellt ist ein Verfahren zur Herstellung eines Rippenrohres (10) mit einer inneren Drall- oder Verwirbelungsstruktur (34), umfassend den Schritt
• Bereitstellen eines Rohrgrundkörpers (12), insbesondere aus Edelstahl, Kupfer oder Aluminium, sowie eines Bandes (13), insbesondere aus Kupfer oder Aluminium.

Die Besonderheit besteht in den Schritten
• Erzeugen oder Übernehmen der, insbesondere wendelförmigen, Drall- oder Verwirbelungsstruktur (34) an der Innenseite (33) des Rohrgrundkörpers (12),
• Berippen, insbesondere wendelförmiges Berippen, des Rohrgrundkörpers (12) auf seiner Außenseite (16), wozu das Band (13) an dem Rohrgrundkörper (12) unter Einsatz eines Laserstrahls (21) befestigt wird.

## Beschreibung

Die Erfindung betrifft gemäß einem ersten Aspekt ein Verfahren zur Herstellung eines Rippenrohres mit einer inneren Drall- oder Verwirbelungsstruktur. Derartige Rippenrohre werden insbesondere in Wärmetauschern eingesetzt und führen in ihrem Inneren beispielsweise Brauchwasser, welches in dem Wärmetauscher erhitzt wird.

In derartigen Wärmetauschern wird das Rippenrohr typischerweise von Fluid umströmt und aufgeheizt, für dessen Energieübertragung auf das geführte Brauchwasser (im Inneren des Rippenrohres) relativ kurze Außenrippen hinreichend sind.

Ein derartig eingesetztes Rippenrohr wird typischerweise in einem Walzverfahren hergestellt, bei welchem die Rippen aus der Außenseite des ursprünglich glatten Rohrkörpers herausgewalzt werden.

Auch hat sich gezeigt, dass eine innere Drall- oder Verwirbelungsstruktur in einem Rippenrohr in bestimmten Anwendungsfällen besonders vorteilhaft ist, da sie die Wärmeübertragung von der Rohrinnenwand auf das geführte Medium fördert. Im Stand der Technik wird die Drall- oder Verwirbelungsstruktur dabei typischerweise im Walzvorgang selbst mitausgebildet, indem eine gesonderte Walzscheibe vorgesehen ist, welche die gewünschte innere Drall- oder Verwirbelungsstruktur durch eine Druckbeaufschlagung des Rippenrohres an der Außenseite in die Rohrwand hineindrückt.

Alternativ ist es aus dem Stand der Technik bekannt, bei einem Walzverfahren den Rohrgrundkörper auf einem Dorn zu lagern, welcher nicht glatt ausgebildet ist, sondern eine Stempelstruktur mit einer gewünschten Drall- oder Verwirbelungsstruktur aufweist. Diese drückt sich dann bei einem Walzvorgang (des auf dem Dorn aufliegenden Rohres) in die Innenseite des Rohres ein, was in dem Rippenrohr selber zu einer nutartigen Drall- oder Verwirbelungsstruktur führt.

Die Aufgabe der Erfindung besteht ausgehend von dem geschilderten Stand der Technik darin, verbesserte Wärmetauscher bereitzustellen.

Die Erfindung löst die gestellte Aufgabe mit den Merkmalen des Anspruches 1 und demnach insbesondere dadurch, ein neuartiges Verfahren zur Herstellung eines Rippenrohres, insbesondere zum Einsatz in einem Wärmetauscher, bereitzustellen, welches durch die folgenden Schritte gekennzeichnet ist:
- Erzeugen oder Übernehmen einer, insbesondere wendelförmigen, Drall- oder Verwirbelungsstruktur an der Innenseite des Rohrgrundkörpers,
- Berippen, insbesondere wendelförmiges Berippen, des Rohrgrundkörpers auf seiner Außenseite, wozu ein Band an dem Rohrgrundkörper unter Einsatz eines Laserstrahls befestigt wird.

Mit anderen Worten wird in dem Verfahren ein Rippenrohr mit einer inneren Drall- oder Verwirbelungsstruktur bereitgestellt, bei welchem die Rippen nicht ausgewalzt sind, sondern vielmehr laserverschweisst werden.

Durch das Laserverschweissen werden Rippenrohre mit inneren Drallstrukturen ermöglicht, welche nunmehr größere Rippen aufweisen können, wodurch der Wärmeübertrag zwischen dem das Rippenrohr umgebenden Medium in einem Wärmetauscher und das im Rippenrohr geführte Medium, insbesondere Brauchwasser, deutlich verbessert wird. Dies ist besonders für den Fall relevant, dass man das äußere Gas in einem Wärmetauscher durch ein anderes Fluid, wie beispielsweise Wasser, ersetzen möchte.

Außerdem ermöglicht die Erfindung eine Ausgestaltung, bei welcher der Rippenrohrgrundkörper (und somit insbesondere auch die innere Drall- und Verwirbelungsstruktur) aus einem anderen Werkstoff besteht als die Rippe bzw. das Band. So bestehen große Vorteile, wenn als Bandmaterial beispielsweise Kupfer eingesetzt wird. Es bestehen jedoch gewisse Vorurteile gegen Kupfer zur Brauchwasserführung, so dass mit der Erfindung ein Rippenrohr mit Drallstruktur ermöglicht wird, welches trotz des sehr geeigneten Kupferbandes einen Rohrgrundkörper beispielsweise aus Edelstahl oder Ähnlichem aufweisen kann.

Bei dem oben dargelegten Stand der Technik bestand jeweils die Notwendigkeit einer Materialeinheitlichkeit (aufgrund des Walzvorgangs). Hingegen ist die Materialwahl durch die Erfindung nunmehr nicht mehr auf ein einziges Material für das gesamte Rippenrohr beschränkt.

Die Erfindung sieht hierfür insbesondere zwei Schritte vor, nämlich einerseits das Erzeugen oder Übernehmen der Drall- oder Verwirbelungsstruktur und andererseits das Berippen mit einem Band unter Einsatz eines Laserstrahls. Die beiden genannten Verfahrensschritte des Hauptanspruches können hierbei grundsätzlich in beliebiger Reihenfolge oder sogar gleichzeitig durchgeführt werden, worauf bei der Würdigung der Unteransprüche noch genauer eingegangen werden wird.

Gemäß dem erfindungsgemäßen Verfahren kann das Berippen des Rohrgrundkörpers, also das Anbringen des Bandes an dem Rohrgrundkörper durch einen Laserschweißvorgang, insbesondere wendelförmig erfolgen.

Bei dem Band handelt es sich typischerweise um sogenanntes Endlosmaterial, welches dann in einer Wendelform um den Rohrgrundkörper herum angebracht werden kann. Die Form kann dabei auch als korkenzieherförmig, helix- oder spiralartig oder ähnliches bezeichnet werden.

Grundsätzlich kann das Band bzw. die Rippe natürlich auch unterbrochen sein. Vorzugsweise ist aber eine durchgängige Rippe vorgesehen.

Auch die Drall- oder Verwirbelungsstruktur an oder auf der Innenseite des Rohrgrundkörpers kann wendelförmig ausgebildet sein. Diese Wendel- oder Spiral- oder Helix- oder Korkenzieherform hat sich dabei als besonders geeignet zur Wärmeübertragung erwiesen. Die Wendelform kann insbesondere durchgängig ausgebildet sein oder auch unterbrochen.

Bei der Drall- oder Verwirbelungsstruktur kann es sich insbesondere um eine materialeinheitlich aus dem Rohrgrundkörper herausgearbeitete Struktur, wie eine Grat- oder Stegstruktur oder Ähnliches handeln, welche in das Rohr hinein positiv vorsteht. Grundsätzlich ist aber auch selbstverständlich eine Nutform oder Ähnliches möglich, bei welcher eine oder mehrere Ausnehmungen bzw. Rücksprünge auf der Innenseite des Rohrgrundkörpers die Drall- oder Verwirbelungsstruktur bilden.

Grundsätzlich ist es auch vorstellbar, dass die Drall- oder Verwirbelungsstruktur nicht einstückig mit dem Rohrgrundkörper ausgebildet ist, sondern von einem externen Körper gebildet wird, beispielsweise einem wendelförmigen Spiralkörper, welcher in den Rohrgrundkörper eingebracht wird. Auch hierunter versteht man im Sinne der vorliegenden Erfindung ein Erzeugen (oder Übernehmen) einer Drall- oder Verwirbelungsstruktur.

Selbstverständlich ist es auch möglich, die Drall- oder Verwirbelungsstruktur eines schon vorbearbeiteten Rohrgrundkörpers schlicht zu übernehmen. In diesem Fall erfolgt dann das Berippen eindeutig in einem zweiten Schritt (nach dem Übernehmen der Drall- oder Verwirbelungsstruktur). Unter dem Begriff "Übernehmen" ist im Sinne der vorliegenden Erfindung schlicht zu verstehen, dass bei der Verfahrensdurchführung in diesem Schritt nichts weiter zu tun ist, da der Rohrgrundkörper eine entsprechende Struktur bereits aufweist.

Die Drall- oder Verwirbelungsstruktur sorgt erfindungsgemäß insbesondere für einen besonders guten Wärmeübertrag von dem Rohrgrundkörper auf das in dem Rohr zu leitende Medium, beispielsweise Brauchwasser, indem der Mediumfluss unterbrochen bzw. abgeändert wird und es im Bereich der Struktur zu Verwirbelungen des geführten Mediums kommt, welche für eine Wärme- oder Energieübertragung vorteilhaft sind.

Gemäß der Erfindung wird zunächst ein geeigneter Rohrgrundkörper bereitgestellt, welcher aus einem geeigneten Material besteht, beispielsweise Edelstahl. Es ist jedoch auch der Einsatz eines Grundkörpers aus Kupfer oder Aluminium oder einem anderen geeigneten Material, wie Titan oder Ähnlichem möglich.

In einem Ausführungsmodus der Erfindung ist der Rohrgrundkörper in seinem Inneren schon vorbearbeitet und weist dort eine Drall- oder Verwirbelungsstruktur auf. Dies führt dazu, dass in dem erfindungsgemäßen Verfahren als ein späterer Schritt einfach das Übernehmen der Struktur erfolgt.

Bei dem Rohrgrundkörper handelt es sich typischerweise um ein außen glattes Rundrohr, welches in einer geraden oder stangenartigen Form vorliegt, und welches in dem erfindungsgemäßen Verfahren weiter bearbeitet wird.

Auch wird erfindungsgemäß ein Band bereitgestellt, mit welchem in einem erfindungsgemäßen Verfahrensschritt die Rippen angeformt werden. Dieses Band kann beispielsweise aus Kupfer bestehen oder Aluminium. Grundsätzlich ist aber auch jedes andere geeignete Material verwendbar, wie z.B. Edelstahl, Titanium oder ein anderes geeignetes Metall.

Erfindungsgemäß wird das Band an dem Rohrgrundkörper mit Hilfe eines Lasers angebracht, insbesondere in einer Wendelform.

Anschließend kann der Rohrgrundkörper mit angeordnetem Band dann auch noch in eine gewünschte Endform hin verformt werden (insbesondere ausgehend von einem geraden Rippenrohrkörper).

Diese abschließend beschriebene Verformung kann typischerweise ebenfalls nach Art einer Spiralverformung erfolgen, wie sie typischerweise in Wärmetauschern, wie Warmwasserspeichern, Boilern oder Ähnlichem Einsatz findet.

Insbesondere für den Fall, dass für das Band und den Rohrgrundkörper das gleiche Material, beispielsweise Kupfer, gewählt werden soll, sollte die Art des Laserstrahls besonders auf diese Materialwahl abgestimmt sein. So bietet sich für den beschriebenen Fall insbesondere ein Faserlaser an.

Je nach Wahl des Lasers kann auch noch einer der folgenden Verfahrensschritte vorgesehen werden:
- Einstrahlen eines, insbesondere von demselben Laser erzeugten, Vorstrahls in einen Kontaktbereich von Band und Rohrgrundkörper, insbesondere zum Anwärmen des Kontaktbereichs vor der Bestrahlung durch den (Haupt-) Laserstrahl.
- Zuleiten eines Kühlgases in den bestrahlten Kontaktbereich, insbesondere zur Kühlung durch erzwungene Konvektion.
- Der Schweißvorgang erfolgt ohne einen Schweißzusatzwerkstoff, wie beispielsweise Schweißdraht, und/ oder es wird eine durchgängige Schweißnaht zwischen Rohrgrundkörper und Band erzeugt.
- Das Band steht vor der Bestrahlung durch den Laserstrahl über einen gewissen Umfangswinkel, insbesondere von mindestens 30 Grad, vorzugsweise mindestens 70 Grad, mit dem, insbesondere rotierenden, Rohrgrundkörper in Kontakt, vorzugsweise unter Zug.
- Das Band ist streifenartig und im Querschnitt, insbesondere durchgängig, rechteckig bzw. I-förmig ausgebildet.

Gemäß einer besonders vorteilhaften Ausgestaltung der Erfindung ist vorgesehen, dass die Drall- oder Verwirbelungsstruktur an der Rohrkörperinnenseite durch eine Druckbeaufschlagung der Rohrkörperaußenseite erzeugt wird. In diesem Sinne kann die Struktur also durch den Rohrkörper hindurchgedrückt werden, indem die gewünschte Struktur an der Rohrkörperaußenseite eingedrückt wird. In diesem Falle wäre die Struktur dann einstückig/stoffschlüssig mit dem Rohrkörper ausgebildet. Dies kann durch jedes geeignete Werkzeug, wie ein Walz- oder Prägewerkzeug oder Ähnliches geschehen. Insbesondere kann hierfür eine Scheibenkante verwendet werden, in der Art, dass eine Scheibe auf die Außenseite des Rohrkörpers mit ihrer Kante drückt. Dies hat eine punkt oder linienartige Beaufschlagung zur Folge, welche zur Schaffung der Drall-Verwirbelungsstruktur an der Körperinnenseite besonders gut geeignet ist.

Wie oben bereits dargelegt, kann alternativ - im Gegensatz zu der beschriebenen positiven Struktur - an der Rohrkörperinnenseite eine Negativstruktur nach Art einer Nut oder Ähnliches vorgesehen werden, beispielsweise indem ein Dorn eine entsprechende Inversstruktur aufweist.

Gemäß der Erfindung ist besonders vorteilhaft vorgesehen, dass das Erzeugen der Drall- oder Verwirbelungsstruktur und das Berippen des Rohrgrundkörpers im Wesentlichen gleichzeitig erfolgen. Dies bedeutet, dass das Berippen und das Erzeugen der Struktur im Wesentlichen in einem einzigen Arbeitsschritt erfolgen. Hierzu kann beispielsweise ein gemeinsames Werkzeug vorgesehen sein, welches sowohl beim Berippen des Grundkörpers hilft als auch beim Erzeugen der Drall- oder Verwirbelungsstruktur.

Ein derartiges Werkzeug kann beispielsweise einen Führungskörper für das Band aufweisen, welcher das Anstellen des Bandes an dem Rohrgrundkörper (und/oder den Rohrgrundkörper selbst) unterstützt, wobei der Führungs- oder Abstützkörper aber auch auf die Außenseite des Rohrgrundkörpers einwirken und diesen beispielsweise eindrücken kann (zur Schaffung der inneren Drall- oder Verwirbelungsstruktur).

Bei dem Führungs- oder Abstützkörper kann es sich insbesondere um eine Führungs- oder Abstützscheibe, beispielsweise aus Titan oder einem anderen Metall, handeln, von welcher vorteilhafterweise mindestens zwei vorgesehen sind. Das Band kann zwischen diesen zwei Scheiben geführt werden. Bevorzugt sind in einem Ausführungsbeispiel mindestens drei Führungs- oder Abstützscheiben vorgesehen, so dass das Band zwischen zwei der Scheiben hindurchlaufen kann.

Ein derartiges Anstellwerkzeug kann beispielsweise dadurch für die Erzeugung und das Durchdrücken einer Drall- oder Verwirbelungsstruktur sorgen, dass eine der mehreren Scheiben, insbesondere die mittlere, weiter nach außen vorsteht (bzw. einen größeren Radius aufweist) als die anderen.

Typischerweise können einem Rohrgrundkörper auch mehrere derartige Werkzeuge zugeordnet sein, welche für die Abstützung des Bandes und/oder des Rohrgrundkörpers sorgen können. Hierbei kann vorzugsweise eines der Werkzeuge für die Erzeugung der Drall- oder Verwirbelungsstruktur sorgen.

Mit den voranstehend beschriebenen Werkzeugen und Ausführungsmodi erfolgt das Erzeugen der Struktur und das Berippen im Wesentlichen gleichzeitig.

Alternativ kann erfindungsgemäß und vorteilhafterweise vorgesehen sein, dass das Erzeugen der Drall- oder Verwirbelungsstruktur und das Berippen des Rohrgrundkörpers unmittelbar nacheinander erfolgen. In diesem Sinne können für das Berippen und das Erzeugen der Struktur völlig unterschiedliche, unabhängige Werkzeugbereiche vorgesehen sein.

Beide Werkzeugbereiche sind insbesondere allerdings in einer Produktionslinie, vorteilhafterweise unmittelbar hintereinander, angeordnet. Auf diese Weise wird es beispielsweise möglich, die beiden Vorgänge innerhalb von wenigen Sekunden hintereinander durchführen zu lassen.

Je nach Anforderung des Herstellverfahrens, kann die Anordnung der Werkzeuge dabei variieren: So kann in einem Ausführungsbeispiel vorgesehen sein, dass zunächst die Drall- und Verwirbelungsstruktur erzeugt wird und anschließend der Rohrgrundkörper berippt wird. Alternativ kann auch vorgesehen sein, dass zunächst der Rohrgrundkörper berippt wird und dann der berippte Rohrgrundkörper mit einer Drall- oder Verwirbelungsstruktur versehen wird.

Im zweitgenannten Fall kann beispielsweise ein walzen- oder scheibenartiges Werkzeug vorgesehen sein, welches parallel zwischen die nebeneinander angeordneten Abschnitte des befestigten Rippenbandes eingreift und hierbei die Struktur von der Außenseite des Rohrgrundkörpers auf die Innenseite des Rohrgrundkörpers durchdrückt.

In dem erstgenannten Fall, in dem zunächst die Innenstruktur (beispielsweise durch einen Walzvorgang) hergestellt wird, kann anschließend eine Berippung erfolgen, wobei vorteilhafterweise vorgesehen ist, dass die Rippen dann jeweils in dem Bereich durch einen Laser befestigt werden, in welchem der Rohrgrundkörper nicht zur Erzeugung der Drall- oder Verwirbelungsstruktur beaufschlagt wurde. Da bei derartiger Beaufschlagung typischerweise eine bzw. mehre Nuten auf der Außenseite des Rohrgrundkörpers entstehen, wird das Band also parallel zu diesen Nuten(abschnitten), vorzugsweise etwa mittig zwischen zwei parallelen Abschnitten, angeordnet.

In einem alternativen Ausführungsbeispiel kann das Band aber auch direkt in besagte Nut(en) gesetzt werden. In beiden Fällen wäre die Drall- oder Verwirbelungsstruktur dabei parallel zu dem Band bzw. der Rippe angeordnet (im ersten Fall allerdings versetzt).

Vorteilhafterweise ist vorgesehen, dass das befestigte Band, welches die Rippen bzw. die Rippe ausbildet, und die Drall- und Verwirbelungsstruktur eine im Wesentlichen gleiche Steigung aufweisen. Dies bedeutet im Sinne der Erfindung, dass die Strukturen parallel angeordnet sind. Vorzugsweise handelt es sich bei beiden Strukturen um helix- oder wendelförmig ausgebildete Strukturen. Grundsätzlich ist es von der Erfindung aber auch umfasst, wenn die Strukturen nicht parallel angeordnet sind, insbesondere für den Fall, dass ein vorkonfektioniertes Rohr verwendet wird, bei welchem eine Drall- oder Verwirbelungsstruktur an der Innenseite vorgesehen ist, ohne dass hierbei die Außenseite eingedrückt wurde.

Wie oben beschrieben, sind für den Fall einer parallelen Anordnung das befestigte Band und die Drall- oder Verwirbelungsstruktur versetzt zueinander angeordnet, so dass das Band nicht in den auf der Außenseite vorgesehenen Nuten (-abschnitten) angeordnet ist, welche bei der Herstellung der Drall- oder Verwirbelungsstruktur durch ein Durchdrücken von der Außenseite des Rohres auf die Innenseite des Rohres entstanden sind.

Gemäß einem weiteren Aspekt löst die Erfindung die gestellte Aufgabe mit einem Rippenrohr nach Patentanspruch 10, welches einen Rohrgrundkörper umfasst, der auf seiner Außenseite mit einem laserverschweißten Band berippt ist und welcher an seiner Innenseite eine Drall- oder Verwirbelungsstruktur aufweist. Zu diesem erfindungsgemäßen Rippenrohr sollen sämtliche voranstehenden Merkmale und Beschreibungen als im Zusammenhang mit diesem offenbart gelten.

Lediglich aus Gründen der Wiederholung und der Übersichtlichkeit der vorliegenden Anmeldung werden nicht sämtliche Beschreibungen noch einmal wiederholt. Insbesondere sollen auch alle Merkmale der Patentansprüche 1 bis 9 im Zusammenhang mit dem Rippenrohr gemäß Merkmal 10 als offenbart gelten. Insbesondere gilt dies für die beschriebenen Materialien, so dass der Rohrgrundkörper beispielsweise aus Edelstahl, Aluminium, Kupfer oder einem geeigneten Material bzw. Metall bestehen kann und das Band aus Kupfer, Aluminium, Titan oder Edelstahl oder anderen geeigneten Materialien, insbesondere Stahl. Auch die Struktur der Drall- oder Verwirbelungsstruktur kann wie oben beschrieben entweder zur Rohrinnenseite hin vorstehen oder negativ in die Wandinnenseite ragen.

Weiterhin wird die der Erfindung zugrunde liegende Aufgabe durch ein Verfahren gemäß Patentanspruch 11 gelöst und demnach durch die folgenden Schritte:
- Herstellen eines Rippenrohres mit einer inneren Drall- oder Verwirbelungsstruktur in einem Verfahren nach einem der Ansprüche 1 bis 9,
- Einbringen des, insbesondere verformten, Rippenrohres in ein abgedichtetes Gehäuse,
- Umspülen des Rippenrohres mit einer Flüssigkeit, insbesondere erhitztem Wasser.

Dadurch, dass ein Herstellungsverfahren für ein Rippenrohr verwendet wird, bei welchem die Rippen laserverschweißt sind, können diese eine gänzlich andere Struktur und Größe aufweisen, so dass nunmehr als außerhalb des Rohres angeordnetes Übertragungsfluid sehr vorteilhaft erhitztes Wasser eingesetzt werden kann. Insbesondere unterstützt die Art der Rippenanbringung und die mögliche materialuneinheitliche Ausbildung des gesamten Rippenrohres im Zusammenspiel mit der Drallstruktur die Wärmeübertragung von dem außenliegenden Medium auf das im Inneren des Rippenrohres geführte Brauchwasser.

Durch die Erfindung wird allgemein ein Wärmedurchgangskoeffizient (des Rippenrohres) von dem Außenfluid auf das geführte Innenfluid (oder anders herum) ermöglicht, welcher typischerweise bei mehr als 80 W/m²K, weiter vorteilhafterweise bei mehr als 100 W/m²K, weiter vorteilhafterweise bei mehr als 200 W/m²K liegt.

Insbesondere die Drallstruktur führt dazu, dass der Effekt der Wärmeübertragung, welcher durch die besonders großen, verlaserten Rippen entsteht, nunmehr bestmöglich ausgenutzt werden kann, indem auch die Wärmeübertragung zwischen Innenwand des Rohres und dem in dem Rohr geleiteten Fluid verbessert wird. Dies optimiert den Wärmedurchgang des gesamten Systems.

Lediglich der Vollständigkeit halber sei zu dem Patentanspruch 11 angemerkt, dass es sich gemäß dem Verfahrensschritt "Umspülen des Rippenrohres mit einer Flüssigkeit" um ein In-Kontakt-Bringen des Rippenrohres mit der Flüssigkeit an der Außenseite handelt, also beispielsweise um ein In-Kontakt-Bringen oder Umspülen mit einer stehenden Flüssigkeit oder alternativ mit einer bewegten, strömenden Flüssigkeit. Der Begriff "Umspülen" muss hierbei nicht zwingend dahingehend ausgelegt werden, dass sich die Flüssigkeit in Bewegung befindet.

Weitere Vorteile der Erfindung ergeben sich aus den gegebenenfalls nicht zitierten Unteransprüchen sowie aus der nun folgenden Figurenbeschreibung.

Darin zeigen
- Fig. 1: in einer sehr schematischen, teilgeschnittenen Seitenansicht ein erfindungsgemäßes Rippenrohr in einem geraden Zustand, wobei die Rippen und die Drallstruktur eine gleiche Steigung aufweisen, jedoch versetzt angeordnet sind,
- Fig. 2a: in einer sehr schematischen Darstellung ein blockartiges Diagramm zum Herstellungsprozess eines Rippenrohres, wie es in Fig. 1 dargestellt ist, ausgehend von einem geraden Glattrohr, welches eine Produktionslinie durchläuft, wobei die Verfahrensschritte des Berippens und der Drallstrukturerzeugung unmittelbar hintereinander erfolgen,
- Fig. 2b: in einer Darstellung gemäß Fig. 2a ein alternativer Herstellungsprozess eines Rippenrohres, wobei die Verfahrensschritte des Berippens und der Drallstrukturerzeugung im Wesentlichen gleichzeitig erfolgen,
- Fig.3: einen ebenfalls schematischen, vergrößerten Ausschnitt eines erfindungsgemäßen Rippenrohres unter Darstellung eines einzelnen Rippenabschnittes etwa mittig zwischen zwei Abschnitten der Drallstruktur,
- Fig. 4: ein Abschnitt, etwa gemäß Kreis IV in Fig. 3 in vergrößerter Darstellung unter Hinzufügung eines weiteren Rippenabschnittes, welcher noch nicht verschweisst ist, links von dem in Fig. 3 dargestellten, bereits befestigten Rippenabschnitt,
- Fig. 5: in einer sehr schematischen, perspektivischen Unteransicht der Aufwicklungsprozess eines Bandes auf einen Rohrgrundkörper zwecks Berippung,
- Fig. 6: in einer Ansicht etwa gemäß Ansichtspfeil VI in Fig. 5 eine frontale, gegebenenfalls geschnittene Ansicht des Rohrgrundkörpers samt Bandes in einer sehr schematischen Darstellung unter zusätzlicher Darstellung eines Stütz- und Beaufschlagungswerkzeuges,
- Fig.7: eine sehr schematische Seitenansicht eines alternativen Stütz- und Beaufschlagungswerkzeuges mit drei Stützeinheiten, welche jeweils drei Stützscheiben umfassen, wobei die mittlere Stützscheibe eines der Werkzeuge einen größeren Durchmesser aufweist und als Beaufschlagungselement zur Erzeugung einer Drall-Struktur an einem lediglich angedeuteten Rohr dient, unter Fortlassung des Bandes,
- Fig. 8: eine schematische, teilgeschnittene Ansicht des Werkzeuges gemäß Fig. 7 etwa entlang Pfeil VIII in Fig. 7, und
- Fig. 9: eine sehr schematische Ansicht eines erfindungsgemäßen Wärmetauscherelementes, aufweisend ein in eine Wendelform überführtes, erfindungsgemäßes Rippenrohr, welches in einem lediglich schematisch angedeuteten Gehäuse von stehendem oder strömenden Heißwasser umflossen wird.

Der nachfolgenden Figurenbeschreibung und den Patentansprüchen sei vorangestellt, dass gleiche oder vergleichbare Teile gegebenenfalls mit identischen Bezugszeichen versehen sind, teilweise unter Hinzufügung kleiner Buchtstaben oder von Apostrophs.

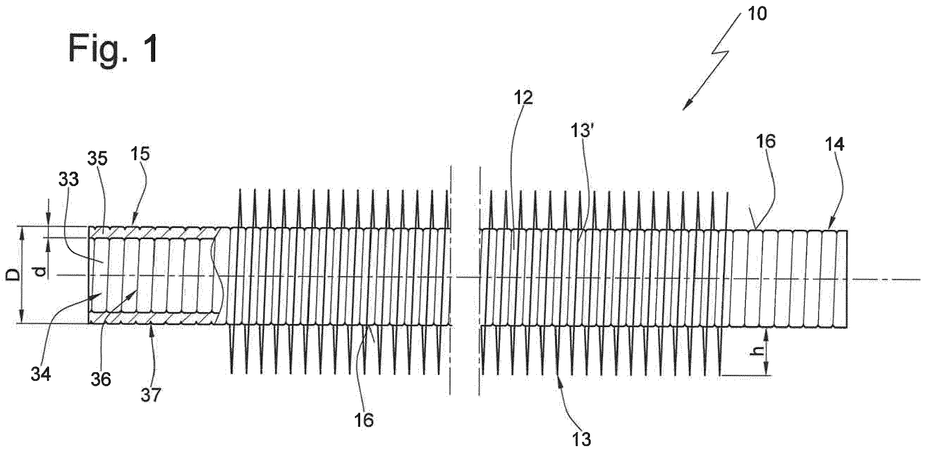

Fig. 1 zeigt zunächst ein bereits fertiggestelltes Rippenrohr 10, welches dem Grunde nach aus zwei separaten Stücken hergestellt worden ist. So ist zunächst ein Rohrgrundkörper 12 ersichtlich, welcher als gerades Rundrohr ausgebildet ist. Um den Grundkörper 12 ist ein Band 13 (beispielsweise ein Kupferband oder auch ein Aluminiumband) wendelförmig gewickelt und an dem Rohrgrundkörper 12 (beispielsweise aus Edelstahl oder einem anderen geeigneten Material, wie es in der Beschreibungseinleitung beschrieben ist) laserverschweißt. Das Band 13 bildet hierdurch eine endlose Rippe 13' aus (wobei die Rippe 13' natürlich tatsächlich eine endliche, festgelegte Länge aufweist; die Rippe 13 ist mit anderen Worten durchgängig ausgebildet).

Das Band 13 lässt ausweislich Fig. 1 die Enden 14 und 15 des Rohrgrundkörpers 12 freistehen und ist an der Außenseite 16 des Rohrgrundkörpers 12 verschweisst. Dieser ist, wie bereits erwähnt und insbesondere an dem linken Ende 15 des Rohrgrundkörpers 12 in der teiltransparenten Darstellung ersichtlich, hohl ausgebildet mit einer Wandstärke d und einem Durchmesser D. Die Rippe 13' weist eine Rippenhöhe h auf.

Der mittlere Abstand a zwischen zwei benachbarten Rippenabschnitten ist in der Zeichnung nicht zwingend maßstabsgetreu wiedergegeben (ebenso wie die Höhe h oder der Durchmesser oder die Wandstärke des Rohres), kann aber beispielsweise einen mittleren Abstand a von bis zu 6 mm erreichen (bzw. eine Steigung von weniger als fünf Rippen/Zoll). Insbesondere kann eine Steigung von zwischen fünf bis dreizehn Rippen/Zoll erreicht werden (was einem mittleren Abstand a von zwischen etwa zwei und fünf Millimetern entspricht).

Fig. 1 lässt desweiteren im geschnitten dargestellten Endbereich 15 erkennen, dass das Rippenrohr 10 an seiner Innenseite 33 mit einer Drall- oder Verwirbelungsstruktur 34 versehen ist.

Diese Drall- oder Verwirbelungsstruktur 34 erstreckt sich über die gesamte Länge des Rohrgrundkörpers 12 und bildet an der Innenseite 33 eine wendelförmige oder helixartige Struktur aus.

Fig. 1 lässt sich desweiteren entnehmen, dass die Drall- oder Verwirbelungsstruktur 34 jedenfalls in dem in Fig. 1 dargestellten Ausführungsbeispiel durch einen Umformprozess der Wand 35 des Rohrgrundkörpers 12 erzeugt wurde: So ist der steg- oder gratartigen Erhebung 36 der Drall- oder Verwirbelungsstruktur 34 an der Innenseite 33 des Rohres 10 an der Außenseite 16 eine entsprechende Vertiefung oder Nut 37 zugeordnet.

Diese Erhebung 36 bzw. Drall- oder Verwirbelungsstruktur 34 dient dabei, wie später noch genauer beschrieben wird, der besseren Wärmeübertragung zwischen der Rohrinnenseite 33 und dem in dem Rohr 10 geführten Medium, beispielsweise zu erhitzendes Wasser.

In Fig. 1 ist dabei angedeutet, dass in dem gezeigten Ausführungsbeispiel die Drall- oder Verwirbelungsstruktur 34 dieselbe Steigung aufweist wie die Steigung der Berippung des Rohres 10. Mit anderen Worten ist das Band 13 bzw. die Rippenabschnitte 13' parallel zu der Drall- oder Verwirbelungsstruktur 34 bzw. der Erhebung 36 angeordnet. Beide Strukturen weisen jedoch einen Parallelversatz auf, was sich beispielsweise im mittleren Bereich des Rohres 10 gemäß Fig. 1 erkennen lässt, in welchem deutlich wird, dass die Nut 37 bzw. ihre Abschnitte an der Außenseite 16 (welche durch die Erzeugung der Drall- oder Verwirbelungsstruktur 34 entsteht) genau zwischen den einzelnen Rippenabschnitten 13' angeordnet ist/sind.

Abschließend lässt sich zu Fig.1 anmerken, dass das dargestellte Rippenrohr 10 selbstverständlich nur ein exemplarisches Ausführungsbeispiel der Erfindung ist. Insbesondere kann das Rippenrohr 10 selbstverständlich auch eine Drall- oder Verwirbelungsstruktur aufweisen, wobei in einem nicht dargestellten Ausführungsbeispiel die Wand 35 an ihrer Außenseite 16 im Wesentlichen glatt ausgebildet ist (von den Rippen abgesehen), jedenfalls dort keine Nut(en) 35 aufweist. Dies ist beispielsweise für den Fall möglich, dass ein vorgefertigtes, außen glattes Grundrohr verwendet wird, welches bereits im Vorfeld oder bei seiner Herstellung mit einer inneren Drall- oder Verwirbelungsstruktur 34 versehen wurde.

Auch kann das Grundrohr 12 an seiner Außenseite 14 für den Fall glatt bleiben, dass eine externe Drall- oder Verwirbelungsstruktur 34 in den Rohrgrundkörper 12 eingebracht wird (beispielsweise dort verklebt, verschweisst, verdrallt wird oder Ähnliches).

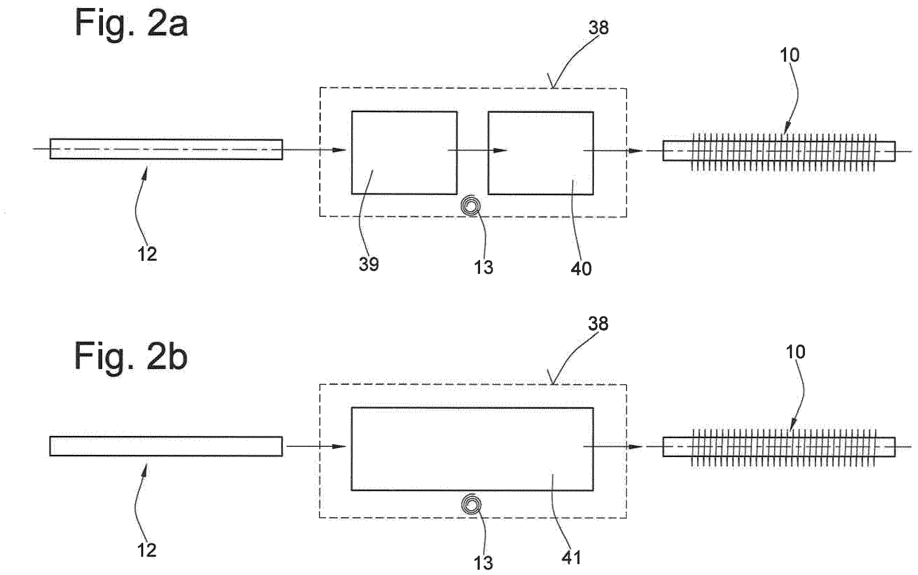

Zwei Beispiele einer erfindungsgemäßen Herstellung eines erfindungsgemäßen Rippenrohres 10, wie es beispielsweise in Fig. 1 dargestellt ist, lassen die Figuren 2a und 2b erkennen:

So zeigt Fig. 2a in einer sehr schematischen Produktionsansicht nach Art eines Blockdiagramms, dass ein zunächst von außen und innen glatter Rohrgrundkörper 12 einer Produktionslinie 38 zugeführt wird, wobei die Produktionslinie 38 als gestrichelter Kasten dargestellt ist.

Die Kästen 39 und 40 der Produktionslinie 38 deuten dabei an, dass die Verfahrensschritte des Berippens des Rohrgrundkörpers 12 und des Erzeugens einer Drall- oder Verwirbelungsstruktur 34 zwar in derselben Produktionslinie 38 und kurz hintereinander erfolgen, dem Grunde nach aber doch gesondert, und beispielsweise in zwei unterschiedlichen, hintereinandergeschalteten Werkzeugbereichen 39 und 40 der Produktionslinie 38 durchgeführt werden.

Beispielsweise kann in dem Werkzeugbereich 39 zunächst, insbesondere durch einen Walz-, Präge- oder Druckvorgang, in dem Grundrohr 12 eine Drall- oder Verwirbelungsstruktur 34 erzeugt werden, und anschließend in dem Werkzeugbereich 40 das mit der inneren Struktur 34 versehene Rohr dann mit dem Band 13 (welches in den Figuren 2a und 2b lediglich als Endlosrolle schematisch angedeutet ist) berippt werden. Beim Verlassen der Produktionslinie 38 erhält man dann das Rippenrohr 10, wie es bereits aus Fig. 1 bekannt ist.

Selbstverständlich können die beiden beschriebenen Funktionen der Werkzeugbereiche 39 und 40 auch genau vertauscht sein, so dass zunächst der Rohrgrundkörper 12 mit dem Band 13 berippt wird (im Werkzeugbereich 39) und anschließend, beispielsweise innerhalb weniger Sekunden später, im Werkzeugbereich 40 dann eine Drall- oder Verwirbelungsstruktur 34 an der Innenseite des berippten Rohres erzeugt wird.

Die Aufteilung in Werkzeugbereiche 39 und 40 gemäß Fig. 2 ist dabei lediglich schematisch zu verstehen. Insbesondere erfolgen die Arbeitsschritte in den Bereichen 39 und 40 während einer einzigen, kontinuierlichen Förderbewegung des Rohres 12, insbesondere innerhalb weniger Sekunden hintereinander.

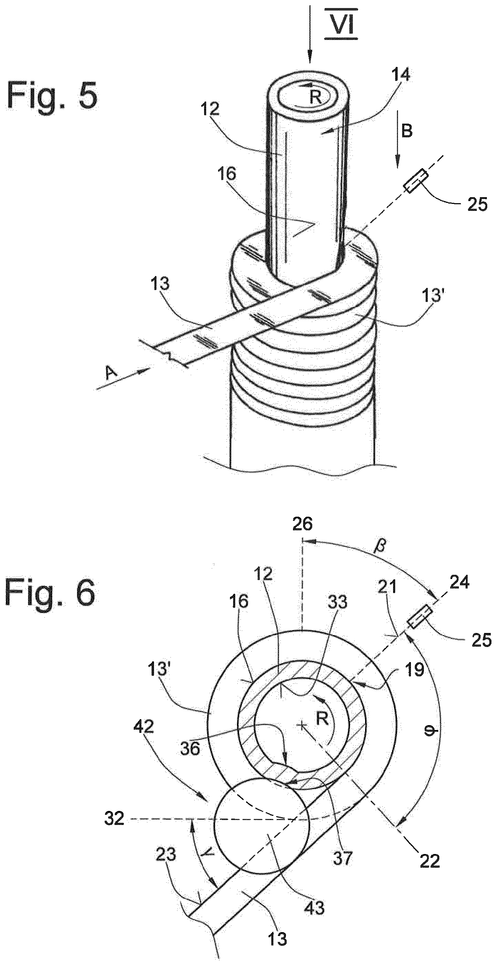

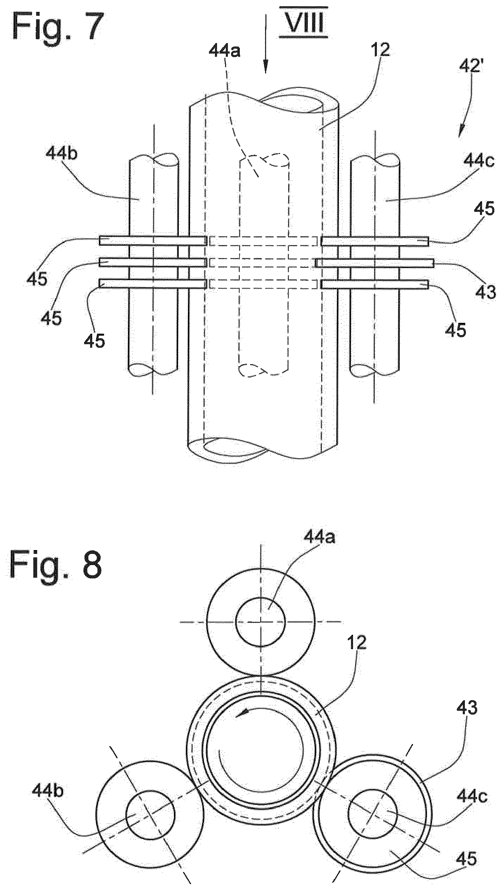

Fig. 2b zeigt dann eine Alternative eines erfindungsgemäßen Herstellungsverfahrens, bei welchem die Produktionslinie 38 gerade nicht zwei separate Werkzeugbereiche zur Durchführung der beiden entscheidenden Verfahrensschritte aufweist, sondern beide Verfahrensschritte in einem gemeinsamen Werkzeugbereich 41, also im Wesentlichen gleichzeitig, durchgeführt werden. So kann die Produktionslinie 38 ein gemeinsames Hauptwerkzeug im Bereich 41 aufweisen (welches selbstverständlich auch verschiedene Unterwerkzeuge umfassen kann), welches im Wesentlichen gleichzeitig für die Berippung des Grundkörpers 12 und für die Erzeugung der Drall- oder Verwirbelungsstruktur 34 sorgt. Ein derartiger Werkzeugbereich wird später im Zusammenhang mit den Figuren 6 und 7 noch genauer beschrieben.

In beiden Fällen der Figuren 2a und 2b wird aus demselben Anfangsprodukt des Rohrgrundkörpers 12 aber ein identisches Rippenrohr 10 erzeugt.

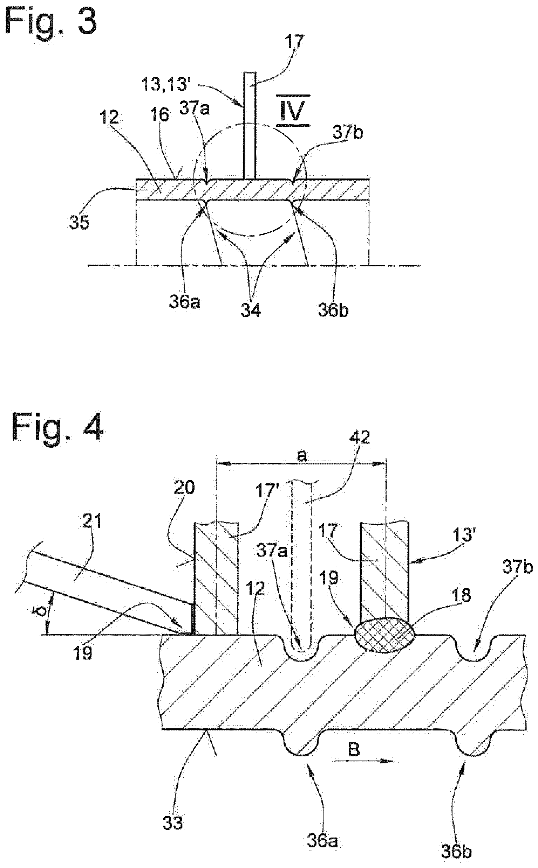

In sämtlichen erfindungsgemäßen Herstellungsverfahren wird das Band 13 an dem Rohrgrundkörper 12 zwecks Berippung laserverschweißt, also unter Einsatz eines Lasers befestigt. Dies sollen Fig. 3 und 4 verdeutlichen:

Hierbei zeigt Fig. 3 zunächst in einer rein schematischen, teilgeschnittenen Darstellung die vergrößerte Einzeldarstellung eines bereits verschweißten Abschnittes 17 der Rippe 13'. Die Rippe 13' ist in dem dargestellten Bereich an der Rohroberfläche 16 bzw. der Wand 35 verschweisst.

Fig. 3 lässt sich hierbei entnehmen, dass in dem dargestellten Ausführungsbeispiel der Rippenabschnitt 17 etwa zentral zwischen den beiden dargestellten Erhebungsabschnitten 36a und 36b bzw. den entsprechenden, an der Außenseite 16 vorgesehenen Nutabschnitten 37a und 37b angeordnet ist.

Es ist grundsätzlich jedoch auch eine andere Ausgestaltung der Erfindung möglich, bei welcher der Rippenabschnitt 17 genau in die Nut 37 bzw. den entsprechenden Nutabschnitt 37a oder 37b eingesetzt wird (also im Wesentlichen kongruent zur Erhebung 36 bzw. den Erhebungsabschnitten 36a oder 36b).

Fig. 4 zeigt in ihrem rechten Darstellungsbereich besagten Abschnitt 17 der Rippe 13', im bereits verschweißten Zustand. Fig. 4 lässt dabei die bereits erstarrte Schmelze 18 im Kontaktbereich 19 zwischen Rohrgrundkörper 12 und Band 13 erkennen. Die Schmelze 18 besteht anteilig aus Material sowohl des Rohrgrundkörpers 12 als auch des Bandes 13 bzw. der Rippe 13' (an deren Unterseite). Alternativ kann eine unaufgeschmolzene Rippe in einen aufgeschmolzenen Bereich des Körpers 12 eingesetzt werden.

Die Rippe 13' ist hierzu im Querschnitt in etwa rechteckig ausgebildet.

Der in Fig. 4 rechtsseitig dargestellte Abschnitt 17 der Rippe 13' befindet sich in Berippungsrichtung B (als bereits festgelegter Abschnitt) weiter vorne als ein in Fig. 3 ebenfalls dargestellter Abschnitt 17'. Dieser Abschnitt 17' der Rippe 13' bzw. des Bandes 13 wird in Fig. 4 gerade in dem Kontaktbereich 19, welcher aufgrund der geraden Rohroberfläche 16 und der geraden Seitenkante 20 der Rippe 13' im Wesentlichen L-förmig ausgebildet ist, verschweisst.

Hierzu fällt ein Laserstrahl 21 eines in Fig. 4 noch nicht dargestellten Lasers unter einem Winkel δ, insbesondere einem geringen Winkel, auf den Kontaktbereich 19. Der Laser 21 bestrahlt hierbei sowohl das Material des Bandes 13 bzw. der Rippe 13' bzw. des Abschnittes 17' als auch Material des Rohrgrundkörpers 12, insbesondere an dessen Oberfläche 16. In dem Ausführungsbeispiel wird der Laserstrahl 21 von einem Faserlaser erzeugt. Selbstverständlich kann je nach Material auch ein anderer geeigneter Laser eingesetzt werden.

Da sich der Abschnitt 17 des Bandes 13 in Berippungsrichtung B vor dem Abschnitt 17' befindet, stellt der linke Abschnitt gemäß Fig. 4 sozusagen den Zustand des Verschweißens eines Abschnittes des Bandes dar und die rechte Seite gemäß Fig. 4 dann den fertigen, angeschweißten Zustand eines Abschnittes des Bandes. Weitere (bereits verschweißte) Abschnitte des Bandes würden sich natürlich insbesondere in Berippungsrichtung B mit definierter Rippensteigung anschließen. Gleiches gilt für die Erhebungen 36 der Drall- und Verwirbelungsstruktur 34.

Bezüglich Fig. 3 und 4 sei angemerkt, dass hier der Anbringungsprozess des Bandes 13 beispielhaft in einem Verfahren angedeutet ist, wie es etwa in Fig. 2a dargestellt ist, wobei insbesondere die Fig. 4 beispielshaft einen Ausschnitt aus dem Werkzeugbereich 40 darstellt. Dies ist bereits dadurch ersichtlich, dass gemäß Fig. 4 lediglich ein Vorgang der Berippung erfolgt, während das Rohr bereits eine im nicht dargestellten Werkzeugbereich 39 erzeugte Drall- oder Verwirbelungsstruktur 34 (bzw. 36) aufweist.

Alternativ kann aber auch ein Herstellungsverfahren durchgeführt werden, wie es in Fig. 2b dargestellt ist. Hierzu ist in Fig. 4 im Bereich der Nut 37a - lediglich gestrichelt - ein Werkzeug 42 angedeutet, welches die Drall- oder Verwirbelungsstruktur 34 an der Innenseite 33 des Rohres erzeugt. Das Werkzeug 42 drückt hierbei von außen auf das Rohr und erzeugt dabei die Nut 37 bzw. 37a, was zur Struktur 36 bzw. 36a an der Innenseite 33 führt. Diese geschieht in demselben Werkzeugbereich, in dem auch der Laserstrahl 21 eingesetzt wird. Es liegt also ein Fall gemäß Fig. 2b vor.

Fig. 5 verdeutlicht dann in einer perspektivischen, aber gleichfalls schematischen Ansicht das Bewickeln des Rohrgrundkörpers 12 mit dem Band 13. Bereits Fig. 5 ist hierbei zu entnehmen, dass das Band 13 zunächst gerade, im Wesentlichen entlang einer Abwicklungsrichtung A auf den Rohrgrundkörper 12 zuläuft und diesen dann an seiner Oberfläche 16 tangential kontaktiert. Der Rohrgrundkörper 12 ist an seinen Enden 14 - wie allerdings nicht dargestellt - endseitig eingespannt, um ihn in Rotationsrichtung R anzutreiben. Der Rohrgrundkörper 12 kann bei diesem Antrieb das Band 13 mitziehen und dieses beispielsweise von einer Vorratsrolle oder einem Teller oder einem Bett (ebenfalls nicht dargestellt) gerichtet und unter einer definierten Zugwirkung abziehen. Zusätzlich kann auch ein Antrieb für die Vorratsrolle (beispielsweise ein Spulenantrieb) vorgesehen sein.

Aufgrund dieser Zugkraft und einer gegebenenfalls vorhandenen Vorschubbewegung des Bandes 13 wird das Band 13 an der Oberfläche 16 des Rohrgrundkörpers 12 kontinuierlich und fortschreitend angestellt.

Hier kann dann der in Fig. 5 angedeutete Laser 25 in den Anstellbereich einstrahlen und das Band an dem Rohrgrundkörper 12 verschweißen.

Gemäß Fig. 5 handelt es sich demnach um ein Ausführungsbeispiel, bei welchem der Rohrgrundkörper bereits eine Drall- oder Verwirbelungsstruktur 34 im Inneren aufweist oder aber um ein Verfahren, bei welchem diese später hergestellt wird (also gemäß Fig. 2a, wobei dann in Fig. 5 der Bereich 39 dargestellt wäre).

Fig. 6 zeigt ein abgewandeltes Ausführungsbeispiel der Fig. 5, jedoch etwa in Ansicht des Pfeils VI gemäß Fig. 5 (da sich das Ausführungsbeispiel bis auf die nun geschilderte Ausnahme nicht unterscheidet):

Das Ausführungsbeispiel gemäß Fig. 6 zeigt nämlich ein Werkzeug 42 nach Art einer Stützeinrichtung für das Band 13 (und gegebenenfalls auch das Rohr 12). Von dem Werkzeug 42 ist in der Ansicht gemäß Fig. 6 lediglich eine in Richtung B hintere Stützscheibe 43 dargestellt, welche in Richtung B vor dem Band 13 angeordnet ist, dieses entgegen der Richtung B aber stützt bzw. sichert.

Eine weitere, in Fig. 6 nicht dargestellte Stützscheibe ist dann in Richtung B, also in die Figurebene gemäß Fig. 6 hinein, hinter dem Band 13 angeordnet und verhindert ein Verschieben des Bandes 13 in Richtung B.

Beide Stützscheiben (43 und die nicht dargestellte Scheibe) sind hierbei auf derselben Achse angeordnet. Die Besonderheit der Stützscheibe 43 liegt darin, dass sie derart angeordnet und ausgebildet ist, dass sie den Rohrgrundkörper 12 umformend beaufschlagt. Insbesondere kann die Stützscheibe 43 daher einen größeren Radius oder Durchmesser aufweisen als die parallele, nicht dargestellte Stützscheibe. Die Scheibe 43 drückt hierbei auf die Außenseite 16 des Rohrgrundkörpers, was an der Innenseite 33 des Körpers 12 dann zu der Erhebung 36 führt, welche die Drall- oder Verwirbelungsstruktur 34 ausbildet (die in Fig. 6 nur angedeutet ist), unter gleichzeitiger Erzeugung einer Nut 37 an der Außenseite 16.

Da auch der Laser 25 im selben Arbeitsschritt für ein Verschweißen des Bandes 13 an dem Körper 12 sorgt, handelt es sich bei dem dargestellten Verfahren gemäß Fig. 6 also um ein Verfahren gemäß Fig. 2b.

Die Beaufschlagung des Rohres 12 mit dem Band 13 beginnt ausweislich Fig. 6 im Übrigen etwa ab einem Bereich, welcher dort mit einer radialen Achse 22 gekennzeichnet ist.

Das Band 13 liegt ab diesem Bereich also mit einer Unterseite 23 kontaktierend an der Oberseite 16 des Rohrgrundkörpers 12 an. In Folge der Rotationsbewegung in Rotationsrichtung R läuft das Band 13 sodann, die Oberfläche 16 des Rohrgrundkörpers 12 kontaktierend (und von dem Werkzeug 42 geführt) über einen Winkelbereich ϕ mit dem Rohrgrundkörper 12 mit, bevor es im Bereich 19 der gezeichneten radialen Achse 24 von dem Laserstrahl 21 mit dem Rohrgrundkörper 12 verschweisst wird.

In dem dargestellten Ausführungsbeispiel beträgt der Winkel ϕ ungefähr 90 Grad. Er kann aber insbesondere zwischen etwa 30 und 120 Grad betragen. Entscheidend ist hierbei, dass das Band 13 in jedem Fall über einen gewissen Winkel ϕ mitgenommen wird, um einen idealen Zeitpunkt für das Verschweißen zu erreichen.

In Fig. 6 lässt sich zudem erkennen, dass der Laser, beispielsweise ein Faserlaser 25, einen gewissen Winkelversatz β zur mit 26 gekennzeichneten Mittelsenkrechte aufweist. Auch diese Einstellung ermöglicht hierbei im Wesentlichen die ideale Ausnutzung des Zeitpunktes, wie oben beschrieben. Alternativ könnte der Laser auch parallel zur Mittelsenkrechten 26 linear verstellt werden (nämlich nach Art einer Parallelverschiebung).

Vorteilhafterweise kann der Laser 25 hinsichtlich seines Einstrahlwinkels β einstellbar sein. Gleiches gilt für den in Fig. 4 dargestellten Einstrahlwinkel δ in der Seitenebene.

Schließlich lässt sich Fig. 6 noch entnehmen, dass das Band 13 von unterhalb einer Waagerechten 32 in einem Winkel γ von typischerweise weniger als 45 Grad, beispielsweise 30 Grad, an den Rohrgrundkörper 12 herangeführt wird, bzw. an das Werkzeug 42. Dies ermöglicht eine Aufbewahrung des Bandbettes oder einer Bandrolle in einer Ebene unterhalb der Aufspannebene des Grundkörpers 12, was zugtechnische Vorteile mit sich bringt.

Außerdem sei angemerkt, dass die Stützscheibe 43 dort lediglich der Übersicht halber in der dargestellten, zwischen dem Rohrgrundkörper 12 und dem Band 13 befindlichen Stellung dargestellt ist. Bei einer tatsächlichen, nicht in den Figuren dargestellten Ausführungsform ist die Stützscheibe 43 mit ihrem Mittelpunkt viel eher auf der Achse 22 angeordnet, wobei sich der Mittelpunkt der Scheibe 43 dann typischerweise in Verlängerung außerhalb von Rohrgrundkörper 12 und Band 13 befindet, angeordnet beispielsweise in dem Bereich, an welchem das Band 13 gerade mit dem Rohrgrundkörper 12 in Kontakt kommt. Diese Position wäre in Fig. 6 aber etwas unübersichtlich und die Scheibe 43 ist daher gemäß Fig. 6 in einer verschobenen Position dargestellt, welche grundsätzlich aber selbstverständlich auch möglich ist. Außerdem sei darauf hingewiesen, dass in Fig. 6 die Außenseite des Bandes 13 nur zufällig bündig mit der Außenseite der Scheibe 43 angeordnet ist. Typischerweise würde das Band 13 etwas weiter hinter die Scheibe 43 zurückspringen.

Fig. 7 zeigt dann das Werkzeug 42 gemäß Fig. 6 in einer leicht abgewandelten Ausgestaltung als Werkzeug 42'. Das Werkzeug 42' weist hierbei beispielhaft drei Stützkörper oder -rollen 44a, 44b und 44c auf (von denen je nach Ausführungsbeispiel selbstverständlich auch mehr oder weniger vorhanden sein können).

Sämtliche drei Stützkörper 44 sind hierbei im Wesentlichen identisch aufgebaut und umfassen jeweils drei Grundstützscheiben 45, welche den gestrichelt angedeuteten Rohrgrundkörper 12 abstützen können.

Die Stützrolle 44a weist zudem eine Führungsfunktion für das nicht dargestellte Band auf. Dieses kann nämlich entlang Stützrolle 44a auf nicht dargestellte Weise auf den Rohrgrundkörper 12 zugeleitet werden, ähnlich wie als Alternative zu Fig. 6 beschrieben (die Stützrollen können vorzugsweise drehbar oder alternativ fest angeordnet sein).

Der Unterschied zur Fig. 6 besteht jedoch darin, dass die Stützrolle 44a gemäß Fig. 7 neben der Hauptstützscheibe 43 noch zwei weitere Grundstützscheiben 45 aufweist. Das Band 13 kann zwischen diesen Scheiben zum Rohr gelangen.

Die Besonderheit dieses Werkzeugs 42' besteht - ähnlich wie beim Werkzeug 42 nach Fig. 6 - jedoch in der Stützscheibe 43 mit größerem Radius. Sämtliche Grundstützscheiben 45, insbesondere die beiden anderen der Stützrolle 44a, weisen einen im Wesentlichen identischen Radius bzw. Durchmesser auf. Hiervon weicht lediglich die Stützscheibe 43 ab, welche einen größeren Durchmesser oder Radius aufweist. Hierdurch kann sie, wie in Fig. 6 grundsätzlich dargestellt, zur Erzeugung der Drall- oder Verwirbelungsstruktur im Inneren des Drallrohres sorgen (in Fig. 7 zwecks Übersichtlichkeit fortgelassen, ebenso wie das Band).

Nicht dargestellt, aber grundsätzlich möglich ist es jedoch, dass auch die anderen oder auch nur eine andere Stützrolle 44b oder 44c eine im Durchmesser entsprechend vergrößerte Stützscheibe aufweisen, oder aber dass an einer einzigen Stützrolle 44 lediglich zwei Stützscheiben 45 vorgesehen sind, von welchen eine größer ausgebildet ist (wie in Fig. 6).

Außerdem sei darauf verwiesen, dass Fig. 7 lediglich eine schematische Darstellung bereitstellt. Damit das Band 13 an dem Rohrgrundkörper 12 mit einer Steigung befestigt werden kann, sind die Stützrollen 44 nämlich in der Praxis tatsächlich nicht - wie die Fig. 7 impliziert - gemäß ihrer longitudinalen Erstreckung parallel zum Rohrgrundkörper 12 ausgebildet, sondern sind zu diesem Rohrgrundkörper 12 vielmehr unter einem gewissen Winkel angeordnet. Hierdurch wird die wendelförmige Anbringungsstruktur des Bandes an dem Rohrgrundkörper unterstützt.

Fig. 8 zeigt dann eine Ansicht des Werkzeuges 42', etwa entlang des Pfeils VIII in Fig. 7, lediglich zwecks räumlicher Orientierung.

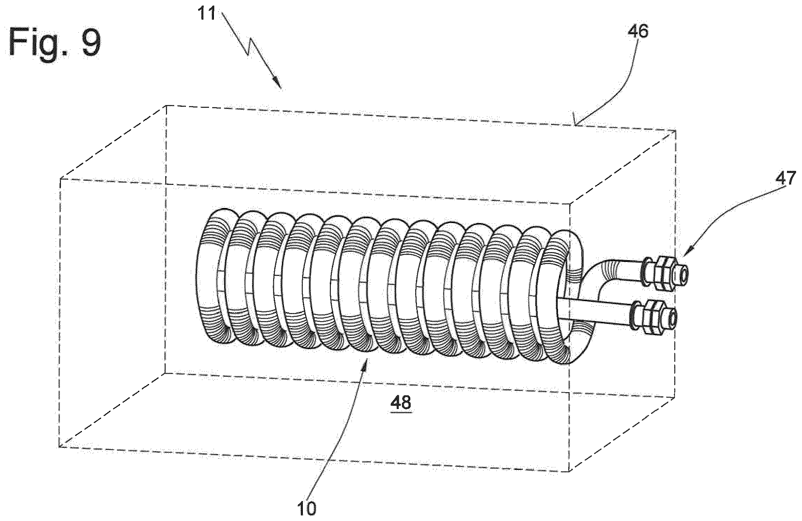

Abschließend sei auf Fig. 9 verwiesen, welche einen Wärmetauscher 11 zeigt, der aus einem abgedichteten Gehäuse 46 besteht, sowie einem darin angeordneten, erfindungsgemäßen Rippenrohr 10. Das Rippenrohr 10 ist hierbei in eine Wendelform überführt bzw. verformt worden, bevor es im Wärmetauscher 11 Verwendung findet.

Die Besonderheit besteht nun darin, dass auf Grund des erfindungsgemäßen Herstellungsverfahrens des Rippenrohres 10 zur Herstellung des Wärmetauschers 11, dieser Wärmetauscher 11 anstatt mit dem sonst üblichen Rauchgas im Außenbereich des Rohres 10 mit einer erhitzten Flüssigkeit 48, insbesondere mit Wasser, befüllt werden kann. Das Wasser kann auf nicht dargestellte, aus dem Stand der Technik aber grundsätzlich bekannte Art und Weise erhitzt werden und diese Wärme auf das in dem Rippenrohr 10 geführte Brauchwasser übertragen.

Die Anschlüsse 47 zur Ein- und Ausleitung des Wassers liegen dabei beispielsweise außerhalb des abgedichteten Gehäuses 46. Erst dadurch, dass für das Rippenrohr 10 ein Anschweißverfahren der Rippen mit einer inneren Drall- oder Verwirbelungsstruktur kombiniert wird, ist es überhaupt möglich, die Leistungseigenschaften eines mit Wasser oder einer Flüssigkeit befüllten Wärmetauschers 11 zu verbessern. Wäre der Wärmetauscher 11 mit Gas oder Rauchgas befüllt, würden die durchgeführten Änderungen nahezu keinen Unterschied machen. Hier könnte der Fachmann auch ein herkömmliches Rippenrohr ohne Innenstruktur nutzen.

Der Unterschied, anstelle von angewalzten Rippen laserverschweißte Rippen zu nutzen, macht sich, insbesondere im Zusammenspiel mit der inneren Drallstruktur, bei dem Einsatz von Wasser als Außenmedium bemerkbar. Dieses verbessert nämlich die Übertragung der Wärme von dem Medium 46 auf die Rippen (bzw. dann auf das Rippenrohr, dort von der Innen- auf die Außenseite oder anders herum) erheblich.

Bei dem Wärmetauscher gemäß Fig. 11 kann es sich insbesondere um einen Boiler, Warmwasserspeicher, eine Therme, einen Pufferspeicher oder Ähnliches handeln.

## Patentansprüche

1. Verfahren zur Herstellung eines Rippenrohres (10) mit einer inneren Drall- oder Verwirbelungsstruktur (34), umfassend den Schritt
• Bereitstellen eines Rohrgrundkörpers (12), insbesondere aus Edelstahl, Kupfer oder Aluminium, sowie eines Bandes (13), insbesondere aus Kupfer oder Aluminium,
**gekennzeichnet durch** die Schritte
• Erzeugen oder Übernehmen der, insbesondere wendelförmigen, Drall- oder Verwirbelungsstruktur (34) an der Innenseite (33) des Rohrgrundkörpers (12),
• Berippen, insbesondere wendelförmiges Berippen, des Rohrgrundkörpers (12) auf seiner Außenseite (16), wozu das Band (13) an dem Rohrgrundkörper (12) unter Einsatz eines Laserstrahls (21) befestigt wird.

2. Verfahren nach Anspruch 1, **dadurch gekennzeichnet, dass** die Drall- oder Verwirbelungsstruktur (34) an der Rohrkörperinnenseite (33) durch eine Druckbeaufschlagung der Rohrkörperaußenseite (16) erzeugt wird, insbesondere durch eine Scheibenkante (43).

3. Verfahren nach Anspruch 1 oder 2, **dadurch gekennzeichnet, dass** das Erzeugen der Drall- oder Verwirbelungsstruktur (34) und das Berippen des Rohrgrundkörpers (12) im Wesentlichen gleichzeitig erfolgen.

4. Verfahren nach einem der vorangegangenen Ansprüche, **dadurch gekennzeichnet, dass** das Erzeugen der Drall- oder Verwirbelungsstruktur (34) durch ein Werkzeug (42') erfolgt, welches das Band (13) oder den Rohrgrundkörper (12) beim Anstellen des Bandes (13) an den Rohrgrundkörper (12) unterstützt, wobei das Werkzeug (42') insbesondere einen Führungs-oder Abstützkörper für das Band und/oder den Rohrgrundkörper aufweist, welcher den Rohrgrundkörper (12) beaufschlagt, wobei das Werkzeug weiter insbesondere mindestens zwei Führungs-oder Abstützscheiben (43, 45) aufweist, von denen eine vorsteht, so dass sie den Rohrgrundkörper (12) beaufschlagt.

5. Verfahren nach einem der vorangegangenen Ansprüche, **dadurch gekennzeichnet, dass** das Erzeugen der Drall- oder Verwirbelungsstruktur (34) und das Berippen des Rohrgrundkörpers (12) unmittelbar nacheinander erfolgen, beispielsweise innerhalb weniger Sekunden oder während einer kontinuierlichen Förderbewegung, insbesondere in derselben Fertigungslinie (38).

6. Verfahren nach einem der vorangegangenen Ansprüche, **dadurch gekennzeichnet, dass** die die Drall- oder Verwirbelungsstruktur (34) von der Innenseite (33) des Rohrgrundkörpers (12) nach innen hin vorsteht, insbesondere grat-oder stegartig.

7. Verfahren nach einem der vorangegangenen Ansprüche, **dadurch gekennzeichnet, dass** das befestigte Band (13) und die Drall- oder Verwirbelungsstruktur (34) eine im Wesentlichen gleiche Steigung aufweisen oder im Wesentlichen parallel angeordnet sind.

8. Verfahren nach Anspruch 7, **dadurch gekennzeichnet, dass** das befestigte Band und die Drall- oder Verwirbelungsstruktur versetzt zueinander angeordnet sind oder einen Parallelversatz zueinander aufweisen.

9. Verfahren nach einem der vorangegangenen Ansprüche, **dadurch gekennzeichnet, dass** als Laser (25) ein Faserlaser eingesetzt wird, wobei der Rohrgrundkörper (12) und das Band (13) insbesondere aus demselben Material, beispielsweise Kupfer oder Aluminium, bestehen.

10. Rippenrohr (10), insbesondere hergestellt nach einem der voranstehenden Ansprüche, umfassend einen Rohrgrundkörper (12), welcher auf seiner Außenseite (16), insbesondere wendelförmig, mit einem laserverschweißten Band (13) berippt ist, und daher insbesondere Schweißstellen (18) aufweist, und welcher an seiner Innenseite (33) eine, insbesondere wendelförmige, Drall- oder Verwirbelungsstruktur (34) aufweist.

11. Verfahren zur Herstellung eines Wärmetauschers (11), wie eines Pufferspeichers, umfassend die Schritte
• Herstellen eines Rippenrohres (10) mit einer inneren Drall- oder Verwirbelungsstruktur (34) in einem Verfahren nach einem der Ansprüche 1 bis 9,
• Einbringen des, insbesondere verformten, Rippenrohres (10) in ein abgedichtetes Gehäuse (46),
• Umspülen des Rippenrohres mit einer Flüssigkeit (48), insbesondere erhitztem Wasser.
